# EUROPEAN PATENT SPECIFICATION

(11) **EP 2 642 866 B1**
(45) Date of publication and mention of the grant of the patent: **04.01.2017**
(21) Application number: 11778890.1
(22) Date of filing: 04.11.2011
(51) Int. Cl.: A23F 3/16

(54) **PROCESS FOR PREPARING TEA PRODUCTS**
VERFAHREN ZUR HERSTELLUNG VON TEEPRODUKTEN
PROCÉDÉ DE PRÉPARATION DES PRODUITS DE THÉ

(30) Priority: 26.11.2010 IN MU00323310; 25.01.2011 EP 11151934
(43) Date of publication of application: 02.10.2013
(73) Proprietor: Unilever N.V., 3013 AL Rotterdam (NL); Unilever PLC, London EC4Y 0DY (GB)
(72) Inventor: GOVINDASWAMY, Vadivel, Whitefield Bangalore 560 066 (IN); MUKHOPADHYAY, Reshmee, Whitefield Bangalore 560 066 (IN); NARAYANAN, Venkatraj, Venkatrao, Whitefield Bangalore 560 066 (IN)
(74) Representative: Askew, Sarah Elizabeth
(86) International application number: PCT/EP2011/069384
(87) International publication number: WO 2012/069298

(56) References cited:
- WO-A1-2009/059924

## Description

### TECHNICAL FIELD OF THE INVENTION

The present invention relates to a process for manufacturing tea products. More particularly the present invention relates to a process for the preparation of tea products comprising tea juice which are suitable for diluting to prepare beverages.

### BACKGROUND TO THE INVENTION

It is known to obtain tea juice by expression from fresh tea leaves.

Tea juice obtained by expression from fresh tea leaves has been disclosed in WO2009059924 A1 (Unilever).

US2005129829A (Kao Corp) discloses a non-tea based, packaged beverage with a green tea extract mixed therein which contains the following ingredients (A) and (B): (A) 0.06 to 0.5 weight percent of non-polymer catechins, and (B) 9 to 13.5 mM of citric acid or a salt thereof. Its pH is from 3.4 to 4.2. The non-tea based, packaged beverage contains catechins at a high concentration, is reduced in bitterness and astringency, and is suited for long term drinking.

US2010143554A (Kao Corp) discloses a concentrated beverage composition for reconstitution which is reduced in bitterness and astringency, adequate in both sweetness and sourness and improved in storage stability despite the inclusion of a high concentration of non-polymer catechins. The concentrated beverage composition for reconstitution contains (A) from 0.5 to 25.0 wt percent of non-polymer catechins, (B) a carbohydrate, and (C) a hydroxycarboxylic acid, and meets the following conditions (D) and (E) as well as at least one condition selected from the following conditions (F1), (F2) and (F3): (D) a content of gallic acid is lower than 0.6 wt percent, (E) a percentage of non-epiforms in the non-polymer catechins is from 5 to 25 wt percent, (F1) a Brix degree is from 20 to 70, and when diluted with deionized water to give a non-polymer catechin concentration of 0.13 wt percent, a pH is from 2.5 to 6.0, (F2) a solid content is not lower than 70.0 wt percent, and when diluted with deionized water to give a non-polymer catechin concentration of 0.13 wt percent, a pH is from 2.5 to 6.0, and (F3) an absorbance at 400 nm is smaller than 0.5 and a pH is from 2.5 to 6.0, when diluted with deionized water to give a non-polymer catechin concentration of 0.13 wt percent.

The present inventors have identified that generation of carbon dioxide during the storage of tea juice in containers can cause problems. Generation of CO₂ during storage in sealed containers may lead to build up of pressure causing puffing up of the package or even bursting of the package. Furthermore, during opening of such a package, the beverage may get discharged in an uncontrolled manner causing spillage and/or an unpleasant consumer experience. The problem is particularly severe for tea juices comprising relatively high amount of tea solids.

The present inventors have now surprisingly found that reducing the pH of the juice leads to a reduction in CO₂ generation during storage.

It is therefore an object of the present invention to provide a packaged tea juice.

It is another object of the present invention to provide a packaged tea juice in a stable form.

It is a further object of the present invention to provide a process for producing a tea juice.

### SUMMARY OF THE INVENTION

According to the present invention there is provided a process comprising the steps of:
a) expressing juice from fresh tea leaves thereby to produce leaf residue and tea juice, and
b) reducing the pH of the tea juice to less than 4; and
c) packaging the tea juice in a sealed container.

### DEFINITIONS

"Tea" for the purposes of the present invention preferably means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention preferably means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" preferably refers to tea leaves, buds and/or stem that have never been dried to a water content of less than 30% by weight, and usually have a water content in the range 60 to 90%.

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fresh leaves during the expression step. However, in order to prevent significant extraction of tea solids by the solvent, the moisture content of the leaves during expression is that of fresh tea leaves as defined hereinabove. In other words, during the expression step, the moisture content of the tea leaves is between 30 and 90% by weight, more preferably between 60 and 90%. It is also preferred that the fresh leaves are not contacted with non-aqueous solvent (e.g. alcohols) prior to or during expression, owing to the environmental & economic problems associated with such solvents.

The term "tea solids" as used herein means solid content of the tea juice determined by gravimetry. Preferably, a known mass (about 1 g of tea juice) is taken in a crucible, the crucible is placed in oven at 105 °C for 8 hours, and the residue in the crucible is weighed to determine tea solids. The tea solids are expressed as % by weight of the tea juice.

The term "water soluble tea solids" as used herein means water extract of the tea solids, that is the soluble matter extracted from the tea solids according to ISO 9768:1994 (Tea: determination of water extract). The principle of the method specified is extraction of soluble matter from a test portion by boiling water under reflux, filtration, washing, drying and weighing of the hot-water-insoluble residue, and calculation of the water extract. The water soluble tea solids are expressed as % by weight of the tea solids.

### DETAILED DESCRIPTION

### Step (a): Expression of Juice

Step (a) of the process of the invention comprises expressing juice from fresh tea leaves thereby to produce leaf residue and tea juice, wherein the amount of expressed juice is between 10 and 300 ml per kg of the fresh tea leaves.

It is particularly preferred that the fresh tea leaves comprise material from var. *assamica* as this variety naturally has a high level of tea actives and so leads to a high level of actives in the leaf residue even after removal of the juice. Most preferably the fresh leaves are fresh leaves from var. *assamica.*

The amount of expressed juice is preferably at least 50 ml per kg of the fresh tea leaves. It is preferred that the amount of juice expressed in step (a) is less than 800 ml per kg of tea leaves, more preferably less than 700 ml and most preferably less than 600 ml. It is also preferred, however that the amount of expressed juice is at least 75 ml per kg of the fresh tea leaves, more preferably at least 100 ml and most preferably at least 150 ml. When referring to the volume of juice expressed per unit mass of tea leaves it should be noted that the mass of the tea leaves is expressed on an "as is" basis and not a dry weight basis. Thus the mass includes any moisture in the leaves.

The expression step may be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof.

The juice may be obtained from the fresh leaves in a single pressing or in multiple pressings of the fresh leaves. Preferably the juice is obtained from a single pressing as this allows for a simple and rapid process.

In order to minimise generation of off-flavours in the leaf tea and/or juice, it is preferred that the expression step is performed at ambient temperature. For example, the leaf temperature may be from 5 to 40 °C, more preferably 10 to 30 °C.

The time and pressure used in the expression step can be varied to yield the specified amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Prior to expression, the fresh tea leaves may undergo a pretreatment including, for example, a unit process selected from heat treatment to deactivate fermentation enzymes, maceration, withering, fermentation or a combination thereof.

If the tea juice and/or leaf residue is to be used to produce a green tea product it is preferred that the fresh leaves are heat treated to deactivate fermentation enzymes prior to expression. Suitable heat treatments include steaming and/or pan-frying.

If the tea juice and/or leaf residue is to be used to produce a black or oolong tea product it is preferred that the fresh leaves are not heat treated to deactivate fermentation enzymes prior to expression. The fresh leaves may or may not be fermented prior to expression. If the leaves are fermented prior to expression then it is particularly preferred that they are macerated prior to fermentation.

Whether or not the fresh leaves are fermented, maceration prior to expression may help in decreasing the time and/or pressure required to express the specified quantity of juice.

The juice comprises preferably at least 4% by weight tea solids, more preferably at least 4.5% by weight tea solids and most preferably at least 5% by weight tea solids. There is no particular upper limit for the amount of tea solids in the tea juice and the tea juice may preferably comprise up to 30% by weight tea solids.

Water soluble tea solids are preferably 70-100% by weight of the tea solids, more preferably 80-100% by weight of the tea solids and most preferably 90-100% by weight of the tea solids

### Step (b): Reducing the pH of the juice

During step (b), the pH of the juice is reduced to less than 4, preferably less than 3.8 and more preferably less than 3.5. The pH of the juice is preferably greater than 0.5, more preferably greater than 1 and most preferably greater than 1.5.

Preferably an acidulant is added during step (b) to the juice to reduce the pH. The pKa of the acidulant is preferably less than 4, more preferably less than 3.8 and most preferably less than 3.5. The pKa of the acidulant is preferably greater than 0.5, more preferably greater than 1 and most preferably greater than 1.5. The pKa refers to pKa1 unless specified otherwise.

The acidulant is preferably an acid. Although both organic acids and inorganic acids can be used as acidulants, it is preferred that the acidulant is an organic acid. It is particularly preferred that the acidulant is selected from citric acid, phosphoric acid or malic acid. More preferably the acidulant is selected from ctitric acid or malic acid.

### Step (c): Packaging the juice

The juice is packaged, by which is meant that the juice is contained within a sealed container. In particular the package is sealed to ensure that the chamber is impermeable to microbiological contaminants by which is meant that the packaged composition can be stored for at least 6 months at a temperature of 20°C without the amount of spore-forming bacteria (*Bacillus* and *Clostridia spp*) in the liquid composition increasing above 100 cfu / ml. Suitable packages include sachets, pouches, capsules, cartons or bottles. Preferably the juice is filled into the packaging, followed by sealing.

From the point of view of cost and convenience of storage and/or packaging, it is preferred that the package is a flexible sachet or pouch. The problem of CO₂ generation is particularly apparent for such packaging. Sachets and pouches are typically formed from flexible packaging material. The most preferred packaging material is plastic-foil laminate material, especially material comprising a metal (such as aluminium) foil layer sandwiched between two or more plastic (such as polyethylene terephthalate, polyethylene, polypropylene or combinations thereof) layers.

It is preferred that a gas other than oxygen, preferably nitrogen is purged through the juice prior to the step of packaging the liquid tea product in a sealed container. It is further preferred that the container is sealed immediately after the step of purging.

### Stability of the Packaged Juice

The process of the present invention results in juice which generates less CO₂ on storage. It is preferred that the package comprises a headspace and the packaged product can be stored at a temperature of 20 °C for 1 month without the content of CO₂ in the headspace increasing above 25% by volume of the headspace. More preferably the amount of CO₂ in the headspace after 1 month is less than 20%, more preferably still less than 15% and most preferably from 0.001 to 10% by volume.

### Processing the Juice

The juice may be used to produce a green tea product, an oolong tea product or a black tea product. In the case of an oolong tea product or a black tea product then the juice is preferably expressed from at least partially fermented leaf in step (a) and/or the juice is subjected to a fermentation step after expression. In the case of a green tea product, the fresh leaves are not fermented before expression and the juice is not fermented after expression. It is possible that the juice is unfermented (e.g. by treating to deactivate the enzymes immediately following expression) whilst the leaf residue is fermented to make black leaf tea or oolong leaf tea. Alternatively, the juice may be fermented following expression whilst the leaf residue is heat-treated to deactivate the fermentation enzymes and processed to a green leaf tea.

In one embodiment the tea juice is diluted to produce a beverage. A suitable process is described, for example, in CN 1 718 030 A (LANCANGJIANG BEER ENTPR GROUP).

The juice is preferably diluted with an aqueous medium, preferably water. The beverage typically comprises at least 85% water, more preferably at least 90%, optimally between 95 and 99.9% by weight of the beverage.

Because the juice is relatively rich in tea solids, it can be diluted many-fold whilst still imparting tea-qualities to the resulting beverage. Preferably, therefore, the juice is diluted by at least a factor of 2 to produce the beverage (i.e. 1 part of juice is combined with 1 part diluent by weight). More preferably the juice is diluted by a factor of at least 5 (i.e. 1 part of juice is combined with 4 parts diluent by weight) and most preferably by a factor of at least 7.

The juice can be used to make concentrated beverages with high levels of tea solids. For example, the juice may be diluted by a factor of less than 50, more preferably less than 25 and most preferably less than 15.

The mass of a single serve of the beverage may be, for example, less than 600 g, more preferably less than 350 g, more preferably still less than 250 g and most preferably from 20 to 150 g.

The pH of the beverage may, for example, be from 2.5 to 8, more preferably 3 to 6, most preferably from 3.5 to 6. The beverage may comprise a food grade acid and/or salt thereof such as citric, malic, ascorbic acid or a mixture thereof.

The beverage preferably comprises at least one nutrient selected from carbohydrate, protein, fat, vitamins, minerals and mixtures thereof. The beverage may be low calorie (e.g. have an energy content of less than 100 kCal per 100 g of the beverage) or may have a high calorie content (e.g. have an energy content of more than 100 kCal per 100 g of the beverage, preferably between 150 and 1000 kCal). It is most preferred that the beverage is very low calorie such that a single serving has a total energy content of less than 5 kCal, more preferably still less than 1 kCal.

The beverage may also comprise any of salt, sweetener, flavours, colours, preservatives, antioxidants or a mixture thereof.

The beverage is preferably packaged. The package will typically be a bottle, can, carton or pouch.

The beverage is preferably sanitised e.g. by pasteurisation or sterilisation.

### Processing the Leaf Residue

Preferably the process comprises a further step of processing the leaf residue to produce leaf tea and/or tea extract. The leaf tea and/or extract is of a quality comparable to that of conventional leaf teas or extracts even though it has been produced from leaf residue which has had the juice removed therefrom. Thus the leaf residue is processed separately from the tea juice. In particular the expressed tea juice is not contacted with the leaf residue during manufacture of the leaf tea and/or tea extract.

The leaf residue may be processed to produce green leaf tea, black leaf tea or oolong leaf tea. In the case of oolong leaf tea and black leaf tea the process comprises fermenting the leaf residue.

The manufacturing processes of green leaf tea, black leaf tea and oolong leaf tea are well known and suitable processes are described, for example, in "Tea: Cultivation to Consumption", K.C. Willson and M.N. Clifford (Eds), 1st Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Efficient drying requires high temperatures and so it is preferred that the process comprises drying the leaf residue at a temperature of at least 75°C, more preferably at least 90°C.

The resulting leaf tea has good infusion performance even at leaf particle sizes comparable to those of conventional leaf teas. Furthermore, leaf tea made from the residue obtained by pressing too high amounts of juice has a relatively low yield of large leaf grades. Thus it is preferred that the process comprises sorting the leaf tea, preferably after drying, to achieve a particle size of at least 35 mesh. More preferably the leaf tea is sorted to achieve a particle size of from 30 mesh to 3 mesh. Alternatively or additionally, the leaf tea may be sorted to achieve a leaf tea grade of Pekoe Fannings (PF) grade or larger, more preferably Orange Fannings (OF) or larger and most preferably Broken Orange Pekoe Fannings (BOPF) or larger.

Although the leaf residue may be extracted with a solvent prior to drying of the leaf residue, in an especially preferred embodiment the extract is produced from made tea. Thus it is preferred that the process comprises processing the leaf residue to produce leaf tea and then extracting the leaf tea with a solvent to produce a tea extract.

The most preferred solvent for use is an aqueous solvent. Preferably the aqueous solvent comprises at least 50% water by weight of the solvent, more preferably at least 90% and most preferably from 99 to 100%.

The solvent may be cold and have a temperature, for example, in the range of from 1 to 50°C. It is most preferred, however, that the solvent is hot as hot solvents tend to be more efficient at extracting tea solids. Thus it is preferred that the solvent temperature is greater than 50°C, more preferably at least 70°C and most preferably from 80 to 100°C.

Preferably the solvent is contacted with the leaf residue in for a time of at least 1 minute. However, because the leaf residue has a good rate of infusion, it is preferred that the solvent is contacted with the leaf residue in for a time of less than 1 hour, more preferably less than 30 minutes and most preferably less than 15 minutes.

The leaf residue and solvent are preferably contacted in a weight ratio in the range of 1:1 to 1:1000, more preferably from 1:4 to 1:100 and most preferably from 1:6 to 1:20.

Following contact of leaf residue with solvent, the leaf residue is usually separated from the liquid extract. Thus in a preferred embodiment, the process comprises de-leafing the extract. This de-leafing step can readily be achieved, for example, by filtering and/or centrifuging the extract.

In a most preferred embodiment, the process comprises removing at least some of the solvent from the extract to produce a concentrated tea extract. Where the solvent is aqueous this will involve drying the extract. The concentrated tea extract may be a liquid concentrate or a solid concentrate, such as a powder. Most preferred is that the tea extract is dried to a powder. Where the concentrated extract is a liquid, it will usually have a moisture content in the range of from 40 to 95% by weight. Where the concentrated extract is a solid concentrate it will typically have a moisture content of less than 30% by weight, more preferably from 1 to 10% by weight.

In a most preferred embodiment the tea extract is processed to produce an instant tea powder. Suitable processes include those described, for example, in Chapter 16 of "Tea: Cultivation to Consumption", K.C. Willson and M.N. Clifford (Eds), 1st Edn, 1992, Chapman & Hall (London).

### The Leaf Tea

The leaf tea is characterised by the combination of a morphology and microstructure resulting from the expression process and a lower level of overall infusible solids than leaf tea made without expressing juice. For example, where the leaf tea is black leaf tea, it will typically have a total polyphenol content of less than 25% by dry weight of the leaf tea, more preferably less than 22% and most preferably less than 20%. Where the leaf tea is green leaf tea, it will typically have a total polyphenol content of less than 28% by dry weight of the leaf tea, more preferably less than 26% and most preferably less than 25%. Owing to the specified amount of expressed juice, however, the total polyphenol content of the leaf tea (whether green or black) is typically greater than 10% by dry weight of the leaf tea, more preferably at least 14% and most preferably at least 18%. The total polyphenol content of the leaf tea is especially high when the tea comprises material from *Camellia sinensis* var. *assamica.* The total polyphenol content of leaf tea can be determined using the Folin-Ciocalteu method as detailed in the draft International Standard published by the International Organization for Standardization as ISO/CD 14502-1:2005 with a corrigendum published as ISO 14502-1:2005/Cor.1:2006.

The leaf tea may be black leaf tea, green leaf tea or oolong leaf tea.

In order that the leaf tea most closely resembles conventional leaf tea it is preferred that at least 90% by weight of the leaf tea has a particle size above 35 mesh. More preferably at least 90% by weight of the leaf tea has a particle size of from 30 mesh to 3 mesh. Alternatively or additionally, the leaf tea may be of Pekoe Fanings (PF) grade or larger, more preferably Orange Fannings (OF) or larger and most preferably Broken Orange Pekoe Fannings (BOPF) or larger.

The leaf tea is preferably packaged in an infusion package. As used herein, the term "infusion package" means a package comprising porous material. The porous material can be any material that is suitable for enabling water to infuse within the package without allowing any insoluble contents to leave the package, for example filter paper, nylon mesh, gauze, muslin, nonwoven fabric or some other similar material or fabric. Such infusion packages are well-known for use with leaf tea and include tea bags and tea pods.

### EXAMPLES

The present invention will be further described with reference to the following examples.

### Example 1: Addition of citric acid to the juice

Fresh tea leaves obtatined from tea gardens in South India were used for the experiments. The tea leaves were withered at 25 °C in the open for 18 hours to bring the moisture to 76-81%. The tea leaves were subjected to CTC (cut tear curl) to obtain macerated dhool. The dhool was fermented for 1 hour and then juice was squeezed out from the fermented dhool by a pneumatic press operating at a pressure of 6kg/cm². The juice obtained was centrifuged at a RPM of 3600 in a REMI centrifugation machine, to separate supernatant and residue. The pH of the supernatant was measured (pH=5.01). To this 50 ml supernatant, 700 mg citric acid was added and the pH was brought down to 3.23. The treated supernatant obtained was poured (5 ml each) in 22 mL vials. The vials were crimped and then heated by immersing the vials in a hot water bath till the contents of the vial reached 75 °C, and maintained at 75°C for 2 minutes. The vials were then taken out of the water bath. The sealed vials were stored at 25°C.

The vials were analyzed for CO₂ in the headspace using a PBI Dansensor (a headspace gas analyzer using a non dispersive IR sensor) at specific intervals. The cap of the sealed vial/can containing tea juice was pierced with the needle which is the inlet for the analyzer. After the analysis, results were expressed in terms of volume percentage.

### Example 2: Addition of Malic acid to the juice

The process was the same as that of Example 1 in all respects except that 700 mg of malic acid was added instead of citric acid

### Example 3: No addition of acid

The process was the same as that of Example 1 in all respects except that the step of addition of acid to lower the pH was omitted.

The results are tabulated below.

**Table 1: Effect of addition of acidulant on CO₂ production**

| Ex No | Acid | pH of the supernatant juice | CO₂ (% by volume) in headspace | | | |
|---|---|---|---|---|---|---|
| | | | Day 1 | Day 15 | Day 30 | Day 60 |
| 1 | Citric acid | 3.23 | 0 | 0.8 | 1.9 | 3.7 |
| 2 | Malic acid | 3.26 | 0.1 | 1.0 | 2.0 | 3.6 |
| 3 | No acid | 5.01 | 1.1 | 2.2 | 3.8 | 6.4 |

From the results it is clear that carbon dioxide formation is reduced by addition of an acidulant.

## Claims

1. A process comprising the steps of:
a) expressing juice from fresh tea leaves thereby to produce leaf residue and tea juice,
b) reducing pH of the tea juice to less than 4; and
c) packaging the tea juice in a sealed container.

2. A process as claimed in claim 1 wherein an acidulant is added to the juice.

3. A process as claimed in claim 2 wherein the pKa of the acidulant is less than 4.

4. A process as claimed in claim 2 or claim 3 wherein the acidulant is selected from citric acid, phosphoric acid or malic acid.

5. A process as claimed in any one of the preceding claims wherein the juice comprises at least 4% by weight tea solids.

6. A process according to any one of the preceding claims wherein the amount of expressed juice is from 50 and 800 ml per kg of the fresh tea leaves.

7. A process according to any one of the preceding claims wherein the fresh tea leaves comprises material from *Camellia sinensis* var. *assamica.*

8. A process according to any one of the preceding claims wherein the moisture content of the fresh tea leaves from which juice is expressed in step (a) is from 30 to 90% by weight of the fresh tea leaves.

## Patentansprüche

1. Verfahren, umfassend die Schritte:
a) Auspressen von Saft aus frischen Teeblättern, um dadurch Blattrückstand und Teesaft herzustellen,
b) Senken des pH des Teesaftes auf weniger als 4 und
c) Verpacken des Teesaftes in einem verschlossenen Behälter.

2. Verfahren, wie in Anspruch 1 beansprucht, wobei ein Säuerungsmittel zu dem Saft gegeben wird.

3. Verfahren, wie in Anspruch 2 beansprucht, wobei der pKa des Säuerungsmittels weniger als 4 beträgt.

4. Verfahren, wie im Anspruch 2 oder Anspruch 3 beansprucht, wobei das Säuerungsmittel unter Zitronensäure, Phosphorsäure oder Äpfelsäure ausgewählt wird.

5. Verfahren, wie in irgendeinem der vorhergehenden Ansprüche beansprucht, wobei der Saft mindestens 4 Gewichts-% Teefeststoffe umfasst.

6. Verfahren nach irgendeinem der vorhergehenden Ansprüche, wobei die Menge des ausgepressten Saftes 50 bis 800 ml pro kg frischer Teeblätter beträgt.

7. Verfahren nach irgendeinem der vorhergehenden Ansprüche, wobei die frischen Teeblätter ein Material von *Camellia sinensis var. assamica* umfassen.

8. Verfahren nach irgendeinem der vorhergehenden Ansprüche, wobei der Feuchtigkeitsgehalt der frischen Teeblätter, aus denen in Schritt (a) der Saft ausgepresst wird, 30 bis 90 Gewichts-% der frischen Teeblätter beträgt.

## Revendications

1. Procédé comprenant les étapes de :
a) expression de jus à partir de feuilles de thé fraîches pour produire par-là un résidu de feuilles et du jus de thé,
b) réduction du pH du jus de thé à moins de 4 ; et
c) emballage du jus de thé dans un récipient scellé.

2. Procédé selon la revendication 1, dans laquelle un acidulant est ajouté au jus.

3. Procédé selon la revendication 2, dans lequel le pKa de l'acidulant est inférieur à 4.

4. Procédé selon la revendication 2 ou la revendication 3, dans lequel l'acidulant est choisi parmi l'acide citrique, l'acide phosphorique ou l'acide malique.

5. Procédé selon l'une quelconque des revendications précédentes, dans lequel le jus comprend au moins 4 % en masse de matières solides de thé.

6. Procédé selon l'une quelconque des revendications précédentes, dans lequel la quantité de jus extrudé est de 50 à 800 ml par kg des feuilles de thé fraîches.

7. Procédé selon l'une quelconque des revendications précédentes, dans lequel les feuilles de thé fraîches comprennent un matériau de *Camellia sinensis* var. *assamica.*

8. Procédé selon l'une quelconque des revendications précédentes, dans lequel la teneur en humidité des feuilles de thé fraîches dont le jus est exprimé dans l'étape (a) est de 30 à 90 % en masse des feuilles de thé fraîches.
